# EUROPÄISCHE PATENTSCHRIFT

(11) **EP 1 912 850 B1**
(45) Veröffentlichungstag und Bekanntmachung des Hinweises auf die Patenterteilung: **01.02.2017**
(21) Anmeldenummer: 06762674.7
(22) Anmeldetag: 19.07.2006
(51) Int. Cl.: B62D 25/08, B62D 29/00

(54) **KRAFTFAHRZEUGKAROSSERIE MIT EINER FEDERBEINAUFNAHME**
MOTOR VEHICLE BODY COMPRISING A SUSPENSION STRUT MOUNT
CARROSSERIE DE VEHICULE AUTOMOBILE POURVUE D'UN LOGEMENT DE JAMBE DE SUSPENSION

(30) Priorität: 13.08.2005 DE 102005038487
(43) Veröffentlichungstag der Anmeldung: 23.04.2008
(73) Patentinhaber: Bayerische Motoren Werke Aktiengesellschaft, 80809 München (DE)
(72) Erfinder: MONNERJAHN, Peter, 80939 München (DE); WALLNER, Stefan, 85053 Ingolstadt (DE)
(86) Internationale Anmeldenummer: PCT/EP2006/007070
(87) Internationale Veröffentlichungsnummer: WO 2007/019935

(56) Entgegenhaltungen:
- EP-A1- 1 084 939
- EP-A2- 0 994 007
- DE-A1- 19 931 741
- DE-A1-102004 019 750
- US-A- 5 456 517

## Beschreibung

Die Erfindung betrifft eine Kraftfahrzeugkarosserie mit einer Federbeinaufnahme nach dem Oberbegriff des Patentanspruchs 1.

Aus der EP 1 084 939 A1 ist Federbeinaufnahme einer Kraftfahrzeugkarosserie bekannt, die als Gussbauteil aus Aluminium besteht.

Ferner ist aus der DE 197 46 165 A1 ein Verbund aus mindestens einem Leichtmetallbauteil und mindestens einem daran angeordneten Zusatzteil bekannt. Das Zusatzteil ist mit mindestens einem Stahlbauteil verschweißbar. Das Leichtmetallbauteil und das Zusatzteil sind durch Druckfügen und / oder Stanznieten miteinander verbunden.

Aufgabe der Erfindung ist es, eine Kraftfahrzeugkarosserie mit einer Federbeinaufnahme zu schaffen, deren Funktion darin besteht, gegenüber einer Stahlkonstruktion einen hohen Gewichtsvorteil vorzuweisen und einen möglichst geringen Bauraum einzunehmen.

Diese Aufgabe wird mit einer Kraftfahrzeugkarosserie mit einer Federbeinaufnahme mit den Merkmalen des Patentanspruchs 1 gelöst.

Erfindungsgemäß ist eine Federbeinaufnahme einer Kraftfahrzeugkarosserie ein Gussbauteil, das aus einem Leichtmetall besteht. Die Federbeinaufnahme ist mit zumindest einem anderen tragenden Bauteil der Kraftfahrzeugkarosserie verbunden, das aus einem Eisenwerkstoff besteht. Aus der EP 1 084 939 A1 ist zwar bereits eine Federbeinaufnahme bekannt, die als Gussbauteil aus Aluminium besteht, allerdings ist diese Federbeinaufnahme mit Motorträgern der Fahrzeugkarosserie verbunden, die ebenfalls aus Aluminium bestehen. In der DE 197 46 165 A1 ist ein Verfahren beschrieben, wie ein Leichtmetallbauteil einer Fahrzeugkarosserie mit einem Stahlbauteil verbunden werden kann. Dazu wird das Leichtmetallbauteil mit einem Zusatzbauteil verbunden, das dann mit dem Stahlbauteil verschweißbar ist. Bei der erfindungsgemäßen Lösung kann dagegen das andere Bauteil aus einem Eisenwerkstoff bestehen, ohne dass zur Verbindung mit der Federbeinaufnahme an dieser zuvor mit hohem Aufwand ein Zusatzbauteil angebracht werden muss. Durch den Einsatz eines Leichtmetalls wie beispielsweise einer Aluminium- oder einer Magnesiumlegierung für die Federbeinaufnahme ergibt sich gegenüber einer Federbeinaufnahme aus einem Eisenwerkstoff eine erhebliche Gewichtsersparnis. Das entsprechend geringere Gewicht der Fahrzeugkarosserie reduziert den Kraftstoffverbrauch und erhöht die Fahrdynamik des Kraftfahrzeugs.

Die Federbeinaufnahme aus Aluminium kann mit dem anderen Bauteil aus dem Eisenwerkstoff nicht verschweißt werden. Daher muss auf andere Verbindung-techniken ausgewichen werden. Bevorzugt ist die Federbeinaufnahme mit dem anderen Bauteil aus dem Eisenwerkstoff mit Stanznieten oder mit einer anderen lösbaren Verbindungstechnik verbunden. Stanznieten haben sich im Karosseriebau seit vielen Jahren bewährt. Sie stellen eine einfach herstellbare und kostengünstige Verbindungstechnik dar. Aber auch andere lösbare Verbindungstechniken wie beispielsweise Verschraubungen sind gut geeignet.

Aluminium ist in der elektrischen Spannungsreihe minderwertiger als ein Eisenwerkstoff. Damit es im Kontaktbereich zwischen der Federbeinaufnahme aus Aluminium und dem anderen Bauteil aus dem Eisenwerkstoff nicht zu einer elektrochemischen Korrosion kommt, ist vorteilhafterweise zwischen der Federbeinaufnahme und dem anderen Bauteil aus dem Eisenwerkstoff eine Isolationsschicht angeordnet. Bevorzugt ist die Isolationsschicht eine Klebstoffschicht. Der Klebstoff isoliert dabei nicht nur die Federbeinaufnahme vom anderen Bauteil, sondern erhöht zusätzlich die Festigkeit der Verbindung der beiden Bauteile, nachdem er ausgehärtet ist. Beim Einsatz eines Klebstoffes als Isolierschicht kann die andere Verbindung zwischen der Federbeinaufnahme und dem anderen Bauteil schwächer dimensioniert werden, beispielsweise können weniger Stanznieten zum Einsatz kommen.

Die Federbeinaufnahme ist ein Gussbauteil. Gussbauteile haben gegenüber Blechbauteilen und gegenüber Strangpressbauteilen den großen Vorteil, dass praktisch ohne Mehrkosten und ohne zusätzlichen Aufwand Anbindungsstellen für Anbauteile integrierbar sind. Bevorzugt sind in die Federbeinaufnahme alle erforderlichen Anbindungsstellen für Anbauteile integriert. Dadurch können zusätzliche Halter und Vorrichtungen entfallen, die bei einer Federbeinaufnahme aus einem Blechbauteil erforderlich sind, um die Anbauteile daran befestigen zu können. Auch weist die Federbeinaufnahme günstigerweise Versteifungsrippen auf. So kann die Federbeinaufnahme auch bei einer kompakten Bauweise eine hohe Steifigkeit und Festigkeit aufweisen. Sie kann in Fahrzeuglängs- und -querrichtung kleiner als eine vergleichbare konventionelle Federbeinaufnahme aus einem Stahlblech sein und dennoch eine vergleichbare Steifigkeit und Festigkeit aufweisen.

Vorteilhafterweise bestehen außer den Federbeinaufnahmen alle tragenden Bauteile eines Vorderwagens der Kraftfahrzeugkarosserie aus einem Eisenwerkstoff. Als Vorderwagen einer Kraftfahrzeugkarosserie wird üblicherweise der gesamte Bereich der Kraftfahrzeugkarosserie bezeichnet, der sich in Fahrtrichtung gesehen vor einer Fahrgastzelle befindet. Üblicherweise wird ein Vorderwagen zumindest gebildet von Motorträgern, Federbeinaufnahmen und einer Achsaufnahme, sowie von einer Reihe zusätzlicher Bauteile, die beispielsweise zur Anbindung der Außenhautteile wie beispielsweise eines Kotflügels erforderlich sind. Die konventionelle Herstellung eines Vorderwagens mit tragenden Bauteilen, die nur aus einem Eisenwerkstoff bestehen, ist kostengünstig und bewährt. Auch ist das Fügen der tragenden Bauteile miteinander durch Schweißverbindungen einfach und preiswert. Allerdings ist ein solcher Vorderwagen mit tragenden Bauteilen nur aus Eisenwerkstoffen schwer im Vergleich zu einem Vorderwagen, dessen tragenden Bauteile alle aus Aluminium bestehen. Ein Vorderwagen mit tragenden Bauteilen aus Aluminium dagegen geht einher mit hohen Materialkosten und aufwendigeren Fügeverfahren. Ein Vorderwagen mit Federbeinaufnahmen aus einem Leichtmetall und allen anderen tragenden Bauteilen aus einem Eisenwerkstoff vereint die Vorteile. So ist gerade bei den Federbeinaufnahmen aus Leichtmetall die Gewichtsersparnis im Vergleich zu Federbeinaufnahmen aus einem Eisenwerkstoff besonders groß. Andererseits kann der Vorderwagen bis auf die Federbeinaufnahmen konventionell zusammengeschweißt werden. Der zusätzliche Aufwand zum Fügen der Federbeinaufnahmen ist noch relativ gering. So zählt Stanznieten als Verbindungstechnik ebenfalls zu den kostengünstigen und leicht zu beherrschenden Fügetechniken im Karosseriebau.

In der Zeichnung ist ein Ausführungsbeispiel der Erfindung dargestellt, anhand dessen die Erfindung im folgenden näher beschrieben wird. Die einzelnen Figuren zeigen in schematischer Darstellungsweise:
- Fig. 1: eine Ansicht einer Kraftfahrzeugkarosserie im Bereich einer Federbeinaufnahme von oben und
- Fig. 2: eine perspektivische Ansicht der Kraftfahrzeugkarosserie aus Fig. 1.

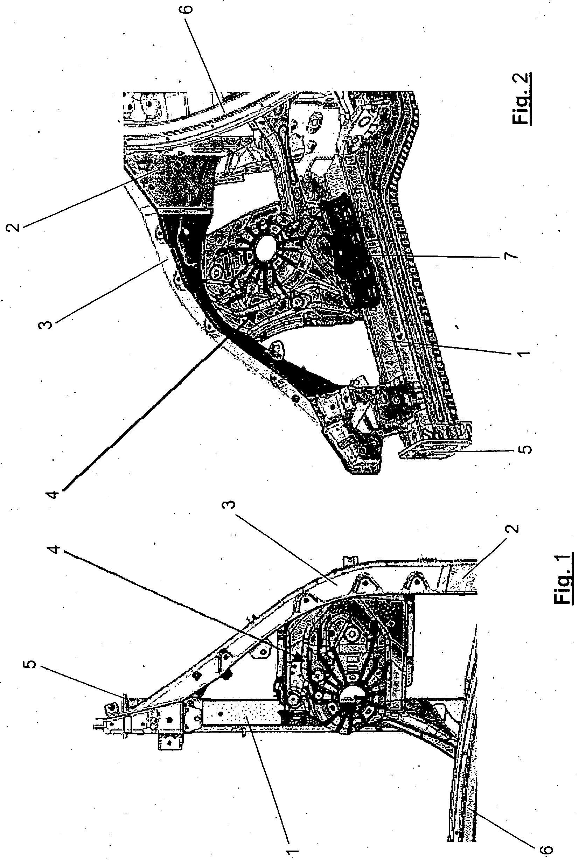

In Fig. 1 und Fig. 2 ist ein Teil eines Vorderwagens einer Kraftfahrzeugkarosserie eines Personenkraftwagens dargestellt. Zu sehen ist ein Motorträger 1, der sich in Fahrzeuglängsrichtung nach vorne erstreckt. An seinem vorderen Ende ist eine Aufnahme 5 angebracht, an der ein Stossfänger befestigbar ist. Nach hinten erstreckt sich der Motorträger 1 etwa bis in den Bereich einer Stirnwand, die sich von einem unteren Windlauf 6, der die untere Begrenzung der Frontscheibe bildet, nach unten zum Fahrzeugboden erstreckt, und die Fahrgastzelle vom Vorderwagen trennt. Der Motorträger 1 setzt sich nach hinten unterhalb der Stirnwand und unter dem Fahrzeugboden als Längsträger fort. Oberhalb des Motorträgers 1 und zur Fahrzeugaußenseite versetzt verläuft von einer A-Säule 2 der Kraftfahrzeugkarosserie ebenfalls nach vorne ein Stützträger 3, dessen vorderes. Ende mit dem Motorträger 1 verbunden ist. Die A-Säule 2 bildet die seitliche vordere Begrenzung der Fahrgastzelle. Sie stellt zugleich nach oben hin die seitliche Begrenzung der Frontscheibe dar. Der untere Windlauf 6 ist mit seinem eine Ende an der dargestellten A-Säule 2 angeschweißt. Zwischen dem Motorträger 1 und dem Stützträger 3 befindet sich eine Federbeinaufnahme 4, die sowohl mit dem Motorträger 1 als auch mit dem Stützträger 3 verbunden ist. Die Federbeinaufnahme 4 dient zur Befestigung eines Endes eines Federbeins, das ein Teil des Fahrwerks des Personenkraftwagens ist.

Der Motorträger 1 und der Stützträger 3 wie auch alle weiteren tragenden Bauteile des Vorderwagens außer den Federbeinaufnahmen 4 bestehen konventionell aus Stahlblech und sind auf bewährte Weise miteinander verschweißt. Nur die Federbeinaufnahme 4 ist ein Gussteil aus einer Aluminiumlegierung und kann daher nicht mit dem Motorträger 1 und mit dem Stützträger 3 verschweißt werden. Zur Verbindung der Federbeinaufnahme 4 mit dem Motorträger 1 und mit dem Stützträger 3 dienen daher Stanznieten und Klebstoff, der im Kontaktbereich der Federbeinaufnahme 4 mit dem Motorträger 1 und mit dem Stützträger 3 aufgebracht ist. Der Klebstoff dient zugleich als Isolationsschicht, um eine elektrochemische Kontaktkorrosion zwischen der Federbeinaufnahme 4 aus der Aluminiumlegierung und dem Motorträger 1 und dem Stützträger 3 aus Stahl zu vermeiden.

Der Einsatz einer Federbeinaufnahme 4 aus einer Aluminiumlegierung reduziert im Vergleich zu einer konventionellen Federbeinaufnahme aus Stahlblech deutlich das Gewicht der Fahrzeugkarosserie. Die Ausführung der Federbeinaufnahme 4 als Gussbauteil ermöglicht es zudem, alle benötigten Anbindungsstellen für Anbauteile an der Federbeinaufnahme 4 direkt in das Gussbauteil zu integrieren, sodass keine zusätzlichen Bauteile wie Halter oder Aufnahmen erforderlich sind, um die Anbauteile an der Federbeinaufnahme 4 befestigen zu können. Zudem kann die Federbeinaufnahme 4 als Gussbauteil beispielsweise durch das Einbringen von Verstärkungsrippen kompakter gegenüber einer Federbeinaufnahme aus Stahlblech und damit bauraumoptimiert gestaltet werden. Damit kann bei der Federbeinaufnahme 4 als Gussbauteil erheblich Bauraum gewonnen werden, ohne dass damit Einbussen bezüglich der Steifigkeit oder Festigkeit verbunden wären. Hierdurch können bekannte Engstellen von Beginn an vermieden werden.

Zur Verbindung der Federbeinaufnahme 4 mit dem Motorträger 1 ist je nach Lastanforderungen eine zusätzliche Abstützung 7 erforderlich, die mit dem Motorträger 1 verschweißt und mit der Federbeinaufnahme 4 durch Stanznieten verbunden ist. Zur Verbindung der Federbeinaufnahme 4 mit dem Stützträger 3 ist kein zusätzliches Bauteil erforderlich. Vielmehr kann die Federbeinaufnahme 4 unmittelbar und direkt mit dem angrenzenden Stützträger 3 verbunden werden.

## Patentansprüche

1. Kraftfahrzeugkarosserie mit zumindest einer Federbeinaufnahme (4), die als Gussbauteil aus einem Leichtmetall besteht, wobei die Federbeinaufnahme (4) mit zumindest einem anderen tragenden Bauteil (1, 3) der Kraftfahrzeugkarosserie verbunden ist, das aus einem Eisenwerkstoff besteht, **dadurch gekennzeichnet, dass** außer den Federbeinaufnahmen (4) alle tragenden Bauteile eines Vorderwagens der Kraftfahrzeugkarosserie aus einem Eisenwerkstoff bestehen.

2. Kraftfahrzeugkarosserie nach Anspruch 1, **dadurch gekennzeichnet, dass** die Federbeinaufnahme (4) mit dem zumindest einen anderen Bauteil (1, 3) aus dem Eisenwerkstoff mit Stanznieten oder mit einer anderen lösbaren Verbindungstechnik verbunden ist.

3. Kraftfahrzeugkarosserie nach Anspruch 1 oder 2, **dadurch gekennzeichnet, dass** zwischen der Federbeinaufnahme (4) und dem zumindest einen anderen Bauteil (1, 3) aus dem Eisenwerkstoff eine Isolationsschicht angeordnet ist.

4. Kraftfahrzeugkarosserie nach Anspruch 3, **dadurch gekennzeichnet, dass** die Isolationsschicht eine Klebstoffschicht ist.

5. Kraftfahrzeugkarosserie nach einem der vorhergehenden Ansprüche, **dadurch gekennzeichnet, dass** in die Federbeinaufnahme (4) Anbindungsstellen für Anbauteile integriert sind.

6. Kraftfahrzeugkarosserie nach einem der vorhergehenden Ansprüche, **dadurch gekennzeichnet, dass** die Federbeinaufnahme (4) Versteifungsrippen aufweist.

7. Kraftfahrzeugkarosserie nach einem der vorhergehenden Ansprüche, **dadurch gekennzeichnet, dass** die Federbeinaufnahme (4) so gestaltet ist, dass sie in Fahrzeuglängs- und -querrichtung kleiner als eine vergleichbare konventionelle Federbeinaufnahme aus einem Stahlblech ist.

## Claims

1. A motor vehicle body having at least one suspension strut mounting (4) which, as a cast component, consists of a light metal, wherein the suspension strut mounting (4) is connected to at least one other structural component (1, 3) of the motor vehicle body, which structural component consists of an iron material, **characterised in that** apart from the suspension strut mountings (4), all the structural components of a front end of the motor vehicle body consist of an iron material.

2. A motor vehicle body according to claim 1, **characterised in that** the suspension strut mounting (4) is connected to the at least one other component (1, 3) consisting of iron material by punch riveting or by another releasable connection method.

3. A motor vehicle body according to claim 1 or claim 2, **characterised in that** an insulation layer is arranged between the suspension strut mounting (4) and the at least one other component (1, 3) consisting of iron material.

4. A motor vehicle body according to claim 3, **characterised in that** the insulation layer is an adhesive layer.

5. A motor vehicle body according to any one of the preceding claims, **characterised in that** connection points for attachments are integrated into the suspension strut mounting (4).

6. A motor vehicle body according to any one of the preceding claims, **characterised in that** the suspension strut mounting (4) has reinforcing ribs.

7. A motor vehicle body according to any one of the preceding claims, **characterised in that** the suspension strut mounting (4) is configured so that it is smaller in the longitudinal direction and transverse direction of the vehicle than a comparable conventional suspension strut mounting consisting of sheet steel.

## Revendications

1. Carrosserie de véhicule comprenant au moins un logement de réception (4) d'une jambe de suspension qui est réalisé en un métal léger sous la forme d'une pièce coulée, le logement de réception d'une jambe de suspension (4) étant relié à au moins un autre composant porteur (1, 3) de la carrosserie du véhicule qui est réalisé en un matériau ferreux,
**caractérisée en ce qu'**
en dehors des logements de réception d'une jambe de suspension (4), tous les autres composants porteurs de la partie avant de la carrosserie du véhicule sont réalisés en un matériau ferreux.

2. Carrosserie de véhicule conforme à la revendication 1,
**caractérisée en ce que**
le logement de réception d'une jambe de suspension (4) est relié à l'autre composant (1, 3) réalisé en un matériau ferreux par estampage, rivetage ou par une autre technique de liaison amovible.

3. Carrosserie de véhicule conforme à la revendication 1 ou 2,
**caractérisée en ce qu'**
une couche d'isolation est installée entre le logement de réception d'une jambe de suspension (4) et l'autre composant (1, 3) réalisé en un matériau ferreux.

4. Carrosserie de véhicule conforme à la revendication 3,
**caractérisée en ce que**
la couche d'isolation est une couche de colle.

5. Carrosserie de véhicule conforme à l'une des revendications précédentes,
**caractérisée en ce que**
des emplacements d'assemblage de pièces de montage sont intégrés dans le logement de réception d'une jambe de suspension (4).

6. Carrosserie de véhicule conforme à l'une des revendications précédentes,
**caractérisée en ce que**
le logement de réception d'une jambe de force (4) comprend des rainures de renfort.

7. Carrosserie de véhicule conforme à l'une des revendications précédentes,
**caractérisée en ce que**
le logement de réception (4) d'une jambe de suspension est réalisé de façon à être plus petit dans la direction longitudinale et dans la direction transversale de déplacement du véhicule qu'un logement de réception d'une jambe de suspension conventionnel en une tôle d'acier comparable.
